# EUROPÄISCHE PATENTANMELDUNG

(11) **EP 1 498 173 A2**
(43) Veröffentlichungstag der Anmeldung: **19.01.2005**
(21) Anmeldenummer: 04016612.6
(22) Anmeldetag: 15.07.2004
(51) Int. Cl.: B01F 5/24, B29B 7/78

(54) **Mischsilo**

(30) Priorität: 16.07.2003 DE 10332233
(71) Anmelder: MOTAN Materials Handling GmbH, 88250 Weingarten (DE)
(72) Erfinder: Heep, Michael, Dipl.-Ing., 88250 Weingarten (DE); Wittreck, Hubert, Dr.-Ing., 88250 Weingarten (DE)
(74) Vertreter: Riebling, Peter, Dr.-Ing.

(57) **Zusammenfassung**

Die Erfindung betrifft Mischsilo, insbesondere für Schüttgut wie beispielsweise Kunststoffgranulat, bestehend aus einem Silobehälter (1) mit konischem Boden (2) der an einem zentralen Behälterauslauf (4) endet und mit einem im Bereich des Bodens (2) eingebauten Mischkreuz (3), dessen Längsachse mit der Mittelachse des Silobehälters zusammenfällt, wobei der Innenraum des Mischkreuzes durch sich von einem konischen Außenmantel des Mischkreuzes zur Mittelachse des Mischkreuzes erstreckende Segmentstege (6-13) in mehrere, in Umfangsrichtung aufeinander folgende Kammern (21,25;30;23,26;31;22,27;32;24;28;33) derart unterteilt ist, dassjeweils in Umfangsrichtung benachbarte Kammern unterschiedlich große Einlauf- und/oder Auslaufquerschnitte haben, wobei der konische Außenmantel des Mischkreuzes vollständig oder teilwiese durch mindestens einige der Innenräume der im Umfangrichtung aufeinander folgenden Kammern durch schräg zur Mittelachse des Mischkreuzes verlaufende Trennelemente (14-17) in mehrere, quer oder radial zur Mittelachse des Mischkreuzes aufeinander folgende Kammern derart unterteilt ist, dass jeweils quer oder radial benachbarte Kammern unterschiedlich große Einlauf- und/oder Auslaufquerschnitte haben. Vorteil hierbei ist ein statisch besonders staviles Mischsilo mit einem hohen Blendfaktor, da die Durchmischung sowohl vertikal, als auch horizontal erfolgt und zudem der eine einfache und sichere Reinigung ermöglicht wird.

## Beschreibung

Die Erfindung betrifft ein Mischsilo der im Oberbegriff der Ansprüche 1 oder 3 angegebenen Gattung. Diese Mischsilos wurden speziell für das Mischen von Kunststoffgranulat entwickelt. Sie werden in der Regel als Schwerkraftmischer oder Umwälzmischer betrieben. Je nach Anforderung und Konzeption wird beim Auslaufen bereits eine akzeptierbare Mischgüte erreicht. Die DE 41 12 884 C2 gibt in der Background-Beschreibung einen umfassenden Überblick über den Stand der Technik, der im wesentlichen auf der Installation von trichterförmigen Einbauten im Konusbereich des Mischsilos beruht, die unter den Handelsamen Binsert, Multiflow, Combiflow usw. bekannt geworden sind.

Nachteilig bei dem Gegenstand der DE 41 12 884 C2 ist jedoch, dass man in den Bodenbereich eines Silobehälters einen separaten, mehrflügeligen Trichter einsetzen muss, was den Herstellungsaufwand und den Unterhaltungsaufwand des Mischsilos wesentlich erhöht.

Dieser Einsatztrichter bildet mit seiner radial äußeren Mantelwand eine zusätzliche Fläche, welche eine Mischkammer ausbildet.

Die Einbringung einer derartigen, zusätzlichen Fläche ist jedoch wegen des höheren Materialverbrauchs unerwünscht.

Eine derartige, separate und im Auslaufbereich angeordnete konisch ausgebildete Mantelfläche ist im Übrigen an der Außenseite sehr schwierig zu reinigen.

Weil sich diese Konusfläche in axialer Richtung nach unten gehend verjüngt, reißt ein daran entlanglaufender Wasserstrom ab und es kommt daher nur zu einer ungenügenden Reinigung dieser Außenfläche des Einsatztrichters.

Die Montage eines derartigen Einsatztrichters erfolgt von der Auslaufseite her, die entsprechend groß dimensioniert werden muss, damit der Einsatztrichter von unten her in den Bodenbereich des Mischsilos eingeführt werden kann.

Aus diesem Grunde muss der Bodenbereich des Mischsilos an den bestimmten, vorgesehenen Einsatztrichter angepasst werden. Damit besteht aber der Nachteil, dass vorhandene Mischsilos nicht in einfacher Weise umgerüstet werden kann, um den Blendfaktor zu verbessern.

Einen anderen Lösungsweg beschreiten die sogenannten Rohrmischer, wo vertikale Rohre mit Schlucköffnungen innen im Silo aus verschiedenen Höhen Granulat zum Auslauf führen. Hier besticht der Gravimerge von Fuller, als Multiplepipe-Blender, der die Rohrkanäle an der Innenwand bis in den Konusbereich anordnet und beim reinen Auslaufen einen Blendfaktor von 3 erreicht. Nachteilig ist der konstruktionsbedingte entsprechende Aufwand für die Reinigung mit Wasser.

Ziel aller Ausführungen ist die Erreichung einer akzeptierbaren Mischgüte bei geringsten Installations- und Betriebskosten und einfachstem Reinigungsaufwand.

Unterzieht man den Stand der Technik einer daraufhin ausgerichteten Analyse, so offenbart diese Stärken und Schwächen, die in der Literatur ausreichend dokumentiert worden sind.

Der Erfindung liegt daher die Aufgabe zugrunde, ein Mischsilo der einleitenden angegebenen Gattung dahingehend zu verbessern, bei einem höheren Blendfaktor eine statisch unproblematische Lösung zu bieten, die außerdem eine einfachste, sichere Reinigung garantiert.

Diese Aufgabe ist erfindungsgemäß durch die im Patentanspruch 1 oder 3 angegebenen Merkmale gelöst.

Der Grundgedanke der Lösung liegt in der Verlegung der Kanalfunktion durch Wegfall von den Innenwänden des Mischsilos in den Auslaufbereich des Mischsilokonus, wo sie mit den beibehaltenden Konusinnenwandkanälen mehrkammerartige Zellen mit unterschiedlichen Volumen und Auslauföffnungen bilden. Damit ist die Reinigungsfläche der Einbauten im Siloauslaufbereich konzentriert und nicht mehr über die gesamte innere Silooberfläche verteilt.

Erstaunlicherweise hat sich herausgestellt, dass durch die Verbindung der Konusinnenwandkanäle durch ein doppeltes Blechkreuz mit senkrechten Wänden, welche gleichzeitig in ihrem Kreuzungsbereich als Mittelrohrhaltung dient, mindestens 13 Auslauföffnungen gebildet werden, wobei 13 unterschiedliche Fließzonen entstehen, die durch unterschiedliche Geschwindigkeiten aus verschiednen Höhen Material gleichzeitig am Auslauf zusammenbringen und dadurch der gewünschte Blendfaktor gewährleistet wird.

Die im Kreuzungspunkt gebildete quaderförmige Säule mit dem integrierten Zentrumsrohr ermöglicht in ihrem Hohlraum die Unterbringung der Waschsprüheinrichtung so dass die senkrechten Blechwände samt Konus- und Kanalwände absolut totraumfrei gewaschen werden könnten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine erste Ausführungsform durch den Bodenbereich eines Mischsilo-Behälters;
- Figur 2:: Draufsicht auf die Anordnung nach Figur 1 in Pfeilrichtung II;
- Figur 3:: eine gegenüber Figur 1 und 2 abgewandelte Ausführungsform mit einem runden Zentralrohr im Mittelkanal;
- Figur 4:: die Draufsicht in Pfeilrichtung IV auf Figur 3, wobei die in Figur 1 und 2 gebildeten Auslauföffnungen im Einzelnen dargestellt sind.

In einem Silobehälter 1 wird in den Boden 2 ein Mischkreuz 3 nach der Erfindung verwendet.

Das Mischkreuz 3 besteht im wesentlichen aus einem axial sich erstreckenden und vertikal gerichteten Mittelkanal 5, der bevorzugt aus einem RechteckHohlprofil besteht.

An den Außenumfang des Mittelkanals 5 sind nun entsprechende Segmentstege 6-13 befestigt, wobei jeweils zwei paarweise zueinandergehörende Segmentstege 6, 8; 7, 11; 9, 10; 12, 13 einen Kreuzarm des Mischkreuzes bilden. Es sind also insgesamt vier Kreuzarme vorhanden.

Selbstverständlich ist die Erfindung nicht auf die Anordnung von vier derartiger Kreuzarme beschränkt. Es können auch drei, zwei oder auch fünf, sechs oder acht Kreuzarme vorhanden sein.

Der vorher als Rechteck- oder Quadratprofil ausgebildete Mittelkanal 5 würde sich dann an die entsprechende Kreuzform des mehrfach gekreuzten Mischkreuzes entsprechend anpassen.

Im Zwischenraum zwischen den paarweise im Abstand zueinander angeordneten Segmentstegen bilden sich deshalb Auslauföffnungen, die später noch näher beschrieben werden.

Zwischen den genannten Kreuzarmen bilden sich größere Auslauföffnungen, die in Figur 4 mit den Bezugszeichen 30, 31, 32, 33 bezeichnet sind.

Die durch die Kreuzarme gebildeten Auslauföffnungen sind wiederum in radialer Richtung untereinander unterteilt, weil im Bereich zwischen den Segmentstegen 6-13 senkrecht hierzu sich erstreckende Trennbleche 14, 15, 16, 17 angeordnet sind.

Damit wird jeder im Kreuzbereich angeordnete Auslaufkanal wiederum in zwei Auslauföffnungen unterteilt.

Insgesamt bilden sich daher gemäß Figur 4 im Bereich zwischen den Segmentstegen 12, 13 und Trennblech 17 die Auslauföffnungen 24, 28.

Im Bereich zwischen den Segmentstegen 7, 11 und den dazugehörenden Trennblech 14 bilden sich die Auslauföffnungen 21, 25.

Im Bereich zwischen den Segmentstegen 9, 10 und dem dazugehörenden Trennblech 15 bilden sich die Auslauföffnungen 23, 26.

Im Bereich zwischen den Segmentstegen 6, 8 und dem Trennblech 15 bilden sich die Auslauföffnungen 22, 27.

Eine weitere zentrale Auslauföffnung 20 wird durch den Innenraum des Mittelkanals 5 gebildet.

Wichtig ist, dass alle Auslauföffnungen 21-28 nicht auf den Auslauf 4 zentriert sind, so wie dies beim Stand der Technik dargestellt ist, sondern die durch die Auslauföffnungen 21-28 gebildeten Schächte sind auf einen Punkt zentriert, der außerhalb und unterhalb des Auslaufes 4 liegt. Damit wird ein sehr reibungsarmer Transport des Mischgutes in Richtung auf den Auslauf 4 gewährleistet, weil nur gering geschrägte Auslaufflächen vorhanden sind.

Die Neigung der Trennbleche 14 - 17 in Richtung zur Vertikalen kann voneinander abweichen, dass heißt, die Trennbleche können durchaus unterschiedlich dimensionierte Auslauföffnungen im unteren Bereich bilden, wodurch sich eine veränderte Mischgüte ergibt.

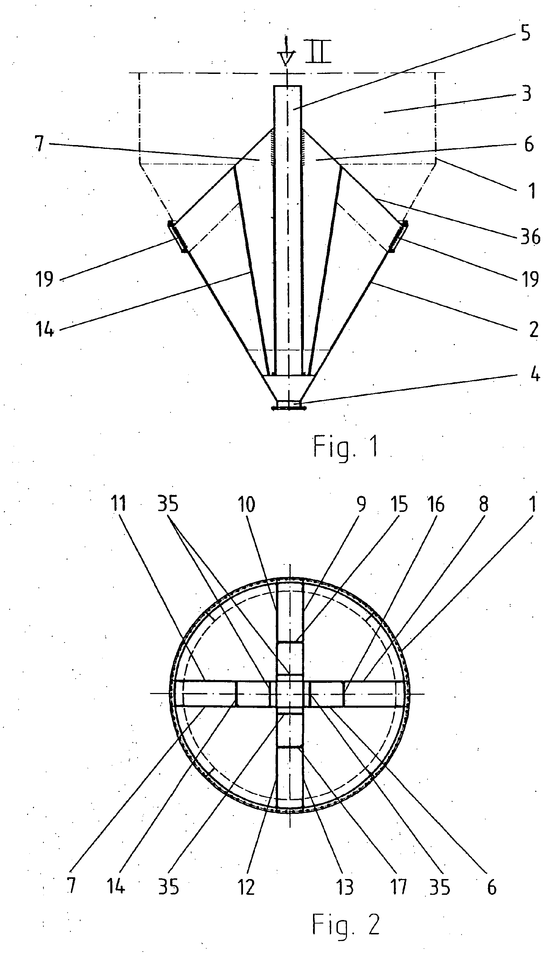

Im gezeigten Ausführungsbeispiel sind alle Trennbleche 14 - 17 in gleicher Richtung zur Vertikalen geneigt, wie dies in Figur 2 dargestellt ist. Die Fußseite der jeweiligen Trennbleche ist mit dem Bezugszeichen 35 versehen.

Ebenso ist es möglich, den radialen Abstand des jeweiligen Trennbleches 14-17 zur Unterbrechung des jeweiligen im Mischkreuz liegenden Auslaufkanals zu verändern. In Figur 2 ist dargestellt, dass die Einlaufseite des jeweiligen Trennbleches 14-17 einen genau gleichen Abstand zur Mittenachse des Mischkreuzes 3 aufweist. Hierauf ist die Erfindung jedoch nicht beschränkt.

Es wird im übrigen bevorzugt, wenn die Oberkante 36 der Segmentstege schräg zur Auslaufrichtung ausgebildet ist, dass heißt gepfeilt ausgerichtet ist. Damit kann eine bessere Einführung der Reibungskräfte auf das Mischkreuz 3 gewährleistet werden.

Die Oberkante der Trennbleche 14 schneidet mit der Oberkante 36 der Segmentstege 6-13 ab.

Die in Flussrichtung aufwärtsgelegene Oberkante der Trennbleche 14 ist deshalb angeschrägt und ebenfalls gepfeilt, um einen geringen Reibungswiderstand für das dort einlaufende Mischgut zu gewährleisten und zu verhindern, dass dort keine Materialablagerungen stattfinden.

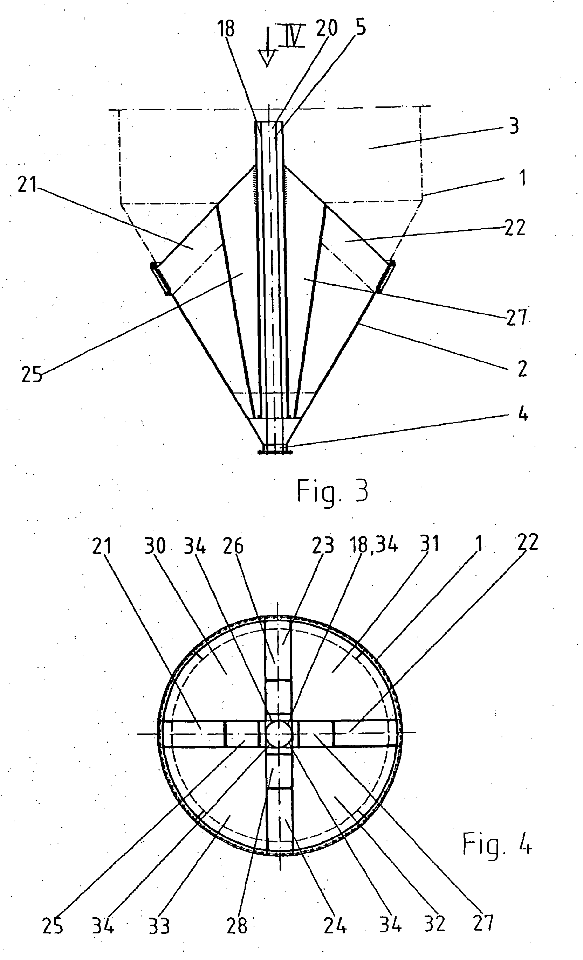

Die Figuren 3 und 4 zeigen als erweiterte Ausführungsform, dass im Innenraum des etwa quadratisch oder rechteckig profilierten Mittelkanals 5 auch ein rundprofiliertes Zentralrohr 18 angeordnet sein kann, welches den gesamten Mittelkanal durchsetzt.

Das Zentralrohr 18 dient dann als Auslauföffnung 20 und hat den Vorteil, dass im Zwischenraum zwischen dem rundprofilierten Zentralrohr 18 und dem eckig profilierten Mittelkanal 5 sich Hohlräume 34 bilden, in welche zugeordnete - in der Zeichnung nicht dargestellte - Wasserleitungen eingebaut werden können. In diesen Wasserleitungen kann das Waschwasser zur Reinigung der Bodenseite des Silobehälters eingebracht werden.

In einer anderen Ausgestaltung können jedoch diese Wasserleitungen auch entfallen und die Hohlräume 34 dienen dann unmittelbar als wasserführende Kanäle zur Einführung des Waschwassers von der Bodenseite her in Richtung auf die obere Auflaufseite des Zentralrohrs 18.

Das erfindungsgemäße Mischkreuz 3 wird mit Hilfe von zugeordneten Schweißstellen 19 an der Innenseite des Silobehälters 1 befestigt. Eine derartige Schweißstelle 19 ist in Figur 1 dargestellt. Sie ist als ringsumlaufende Bandage ausgeführt.

Das Material des Mischkreuzes 3 (Trennbleche 14-17 und die Segmentstege 6-13) können aus einem Chrom-Nickel-Stahl, aus einem Blech oder einem Aluminiumblech hergestellt werden. Selbstverständlich ist die Ausführung als Kunststoffteil ebenso möglich.

Vorteil dieser erfindungsgemäßen Mischsilos ist, dass nun ein separates Einbauteil entfällt und dass nun weniger reibungserhöhende Flächen vorhanden sind, wobei das gebildete Kastenprofil der Auslauföffnungen 21-28 die entstehenden Drücke des Mischgutes wesentlich besser aufnehmen können als rund ausgebildete Wände nach dem Stand der Technik, die entsprechend verstärkt ausgebildet werden müssen.

Eine derartige rund ausgebildete und konisch gerichtete Wandung nach dem Stand der Technik bildet deshalb einen relativ großen Reibungswiderstand für das dort entlanglaufende Mischgut, was bei der Erfindung vermieden ist.

Man kann das erfindungsgemäße Mischkreuz 3 auch als Verstärkung des konisch ausgebildeten Bodenbereichs 2 des Silobehälters 1 auffassen, wodurch dieser Boden verstärkt wird. Dies ist ein wesentlicher Vorteil gegenüber dem Stand der Technik.

Vorteil der Erfindung ist also ein statisch besonders stabiles und leicht und sicher zu reinigendes Mischsilo durch direktes Befestigen des Mischkreuzes an dem konischen Boden des Silos welches einen hohen Blendfaktor besitzt, da alles zu mischende Gut durch das Mischkreuz hindurch läuft und die Durchmischung sowohl vertikal (axial zur Mittelachse des Mischkreuzes), als auch horizontal (radial zur Mittelachse des Mischkreuzes) erfolgt.

### Zeichnungslegende

- 1: Silobehälter
- 2: Boden (von 1)
- 3: Mischkreuz
- 4: Auslauf
- 5: Mittelkanal
- 6-13: Segmentsteg
- 14-17: Trennblech
- 18: Zentralrohr
- 19: Schweißstelle
- 20: Auslauföffnung
- 20-28: Auslauföffnung
- 30-33: Auslauföffnung
- 34: Hohlraum
- 35: Fußseite
- 36: Oberkante

## Patentansprüche

1. Mischsilo, insbesondere für Schüttgut wie beispielsweise Kunststoffgranulat, bestehend aus einem Silobehälter (1) mit konischem Boden (2) der an einem zentralen Behälterauslauf (4) endet und mit einem im Bereich des Bodens (2) eingebauten Mischkreuz (3), dessen Längsachse mit der Mittelachse des Silobehälters (1) zusammenfällt, wobei der Innenraum des Mischkreuzes (3) durch sich von einem konischen Außenmantel des Mischkreuzes (3) zur Mittelachse des Mischkreuzes (3) erstreckende Segmentstege (6-13) in mehrere, in Umfangsrichtung aufeinander folgende Kammern (21, 25; 30; 23, 26; 31; 22, 27; 32; 24, 28; 33) derart unterteilt ist, dass jeweils in Umfangsrichtung benachbarte Kammern (21, 25; 30; 23, 26; 31; 22, 27; 32; 24, 28; 33) unterschiedlich große Einlauf- und/oder Auslaufquerschnitte haben, **dadurch gekennzeichnet, dass** der konische Außenmantel des Mischkreuzes (3) vollständig oder teilweise durch mindestens einen Teil des konischen Bodens (2) des Silobehälters (1) gebildet wird und dass mindestens einige Innenräume der in Umfangrichtung aufeinander folgenden Kammern (21, 25; 30; 23, 26; 31; 22, 27; 32; 24, 28; 33) durch schräg zur Mittelachse des Mischkreuzes (3) verlaufende Trennelemente (14-17) in mehrere, quer oder radial zur Mittelachse des Mischkreuzes (3) aufeinander folgende Kammern (21, 25; 23, 26; 22, 27; 24, 28) derart unterteilt sind, dass jeweils quer oder radial benachbarte Kammern (21, 25; 23, 26; 22, 27; 24, 28) unterschiedlich große Einlauf- und/oder Auslaufquerschnitte haben.

2. Mischsilo, insbesondere für Schüttgut wie beispielsweise Kunststoffgranulat, bestehend aus einem Silobehälter (1) mit konischem Boden (2) der an einem zentralen Behälterauslauf (4) endet und mit einem im Bereich des Bodens (2) eingebauten Mischkreuz (3), dessen Längsachse mit der Mittelachse des Silobehälters (1) zusammenfällt, wobei der Innenraum des Mischkreuzes (3) durch sich von einem konischen Außenmantel des Mischkreuzes (3) zur Mittelachse des Mischkreuzes (3) erstreckende Segmentstege (6-13) in mehrere, in Umfangsrichtung aufeinander folgende Kammern (21, 25; 30; 23, 26; 31; 22, 27; 32; 24, 28; 33) unterteilt ist, **dadurch gekennzeichnet, dass** der konische Außenmantel des Mischkreuzes (3) vollständig oder teilweise durch mindestens einen Teil des konischen Bodens (2) des Silobehälters (1) gebildet wird und dass mindestens einige der Innenräume der im Umfangrichtung aufeinander folgenden Kammern (21, 25; 30; 23, 26; 31; 22, 27; 32; 24, 28; 33) durch schräg zur Mittelachse des Mischkreuzes (3) verlaufende Trennelemente (14-17) in mehrere, quer oder radial zur Mittelachse des Mischkreuzes (3) aufeinander folgende Kammern (21, 25; 23, 26; 22, 27; 24, 28) derart unterteilt ist, dass jeweils quer oder radial benachbarte Kammern (21, 25; 23, 26; 22, 27; 24, 28) unterschiedlich große Einlauf- und/oder Auslaufquerschnitte haben.

3. Mischsilo nach Anspruch 2, **dadurch gekennzeichnet, dass** der Innenraum zwischen konischem Boden (2) und Mischkreuz (3) in mehrere, in Umfangsrichtung aufeinander folgende Kammern (21, 25; 30; 23, 26; 31; 22, 27; 32; 24, 28; 33) derart unterteilt ist, dass jeweils in Umfangsrichtung benachbarte Kammern (21, 25; 30; 23, 26; 31; 22, 27; 32; 24, 28; 33) unterschiedlich große Einlauf- und/oder Auslaufquerschnitte haben.

4. Mischsilo nach einem der Ansprüche 1 bis 3, **dadurch gekennzeichnet, dass** die Trennelemente (14-17) in Förderrichtung des zu mischenden Gutes von radial außen nach radial innen im Bezug zur Mittelachse des Mischkreuzes (3) verlaufen.

5. Mischsilo nach einem der Ansprüche 1 bis 4, **dadurch gekennzeichnet, dass** die Segmentstege (6-13) sich vertikal parallel und horizontal oder radial quer zur Mittelachse des Mischkreuzes (3) erstrecken, diese Mittelachse jedoch nicht schneiden und paarweise parallel zueinander verlaufen.

6. Mischsilo nach Anspruch 5, **dadurch gekennzeichnet, dass** die paarweise angeordneten Segmentstege (6-13) zwischen den jeweiligen Paaren einen Abstand aufweisen, der etwa dem Durchmesser oder der Kantenlänge des Querschnitts des Mittelkanalrohrs (5) entspricht.

7. Mischsilo nach einem der Ansprüche 1 bis 6, **dadurch gekennzeichnet, dass** die Segmentstege (6-13) an einem zentralen stangenförmigen Element (5) enden.

8. Mischsilo nach Anspruch 7, **dadurch gekennzeichnet, dass** zentrale stangenförmige Element (5) als Mittelkanalrohr mit durchgehender Auslauföffnung (20) zum Durchlass des zu mischenden Gutes ausgebildet ist.

9. Mischsilo nach Anspruch 8, **dadurch gekennzeichnet, dass** das Mittelkanalrohr (5) im Querschnitt quadratisch oder rechteckförmig ausgebildet ist.

10. Mischsilo nach einem der Ansprüche 1 bis 9, **dadurch gekennzeichnet, dass** in dem Mittelkanalrohr (5) eine Waschsprüheinrichtung angeordnet ist.
